# EUROPEAN PATENT APPLICATION

(11) **EP 1 060 807 A1**
(43) Date of publication of application: **20.12.2000**
(21) Application number: 00304932.7
(22) Date of filing: 09.06.2000
(51) Int. Cl.: B21C 25/02, B21K 1/30, B21J 5/12, F16H 55/02

(54) **Helical gear with shaft, extrusion forming method for helical tooth profile and extrusion forming die for helical tooth profile**

(30) Priority: 17.06.1999 JP 17170099; 27.04.2000 JP 2000128273
(71) Applicant: Sawai Knowledge Laboratory Limited, Ichinomiya City, Aichi Prefecture 491-0041 (JP)
(72) Inventor: Sawai, Kenichi, Ichinomiya City, Aichi Pref. 491-0041 (JP)
(74) Representative: Chettle, Adrian John

(57) **Abstract**

In a method for pressing gear material, in the axial direction (B1), within a forming die (22) comprising a plurality of tooth profile forming portions (36) twisted with respect to the longitudinal axis formed on the inner peripheral surface to form a helical tooth profile, the service life of the forming die (22) will be extended.

Of tooth profile forming portions (36) protruding into a forming die (22) on the longitudinal axis side, the introduction-side end portion (36e) of gear material is caused to incline by an angle α in a direction opposite to a direction of the torsion of the tooth profile forming portion (36) with respect to the longitudinal axis (B1) around the longitudinal axis (B1). A portion of the gear material strikes against the tooth surface forming portion (36c), and is going to break it by means of a lateral component force (FR1). Since, however, the other portion of the gear material is caused to be pressed against the inclined surface (36f) of the end portion (36e), there is generated a force (FC1) in the opposite direction, which opposes to a force (FR1) toward breaking to receive from the tooth surface forming portion (36c). These two forces are composed to negate each other, and the force toward breaking is reduced.

## Description

The present invention relates to a helical gear with shaft, an extrusion (forging) forming method for a helical tooth profile, and an extrusion forming die for a helical tooth profile used for the method.

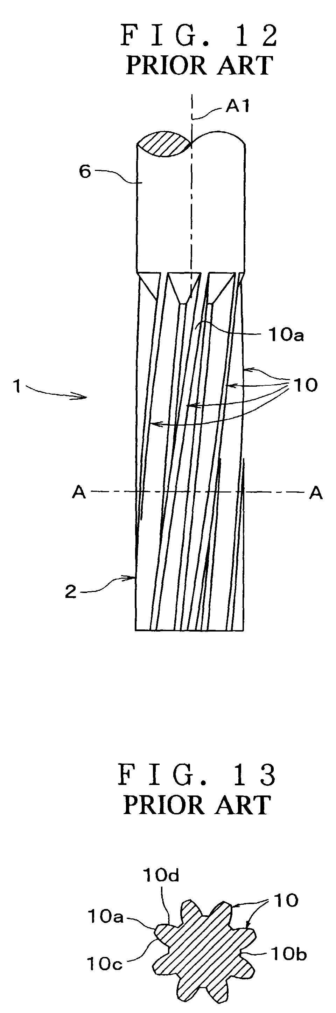

Fig. 12 shows an example of a conventional helical gear with shaft (hereinafter, referred to also as helical gear simply) 1 having a helical tooth profile, and each of tooth 10 inclines from upper right toward lower left in Fig. 12 with respect to a longitudinal axis A1. As shown in the figure, the helical gear 1 has a twisted tooth trace so as to mesh with a rack or another helical gear (not shown), and is integrally provided with a gear portion 2 in which a plurality of teeth 10 obliquely twisted with respect to the longitudinal axis A1 are formed at equal intervals, and, at its one end portion, a cylindrical shaft portion 6 having the same diameter as, for example, its addendum circle diameter. A cross section taken on line A-A, of the gear portion 2, perpendicular to the longitudinal axis A1 thereof has the shape of the tooth profile shown in Fig. 13, and the width of the addendum 10a of each of these teeth 10 is the same throughout the entire length of the tooth trace in the same manner as normal gears.

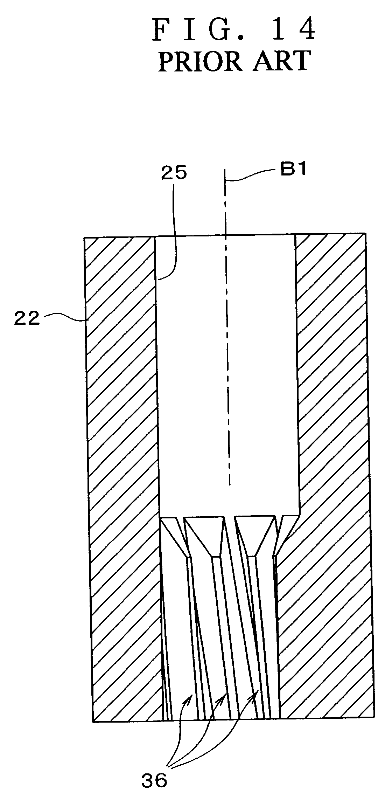

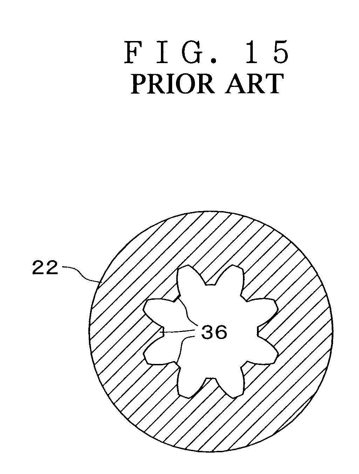

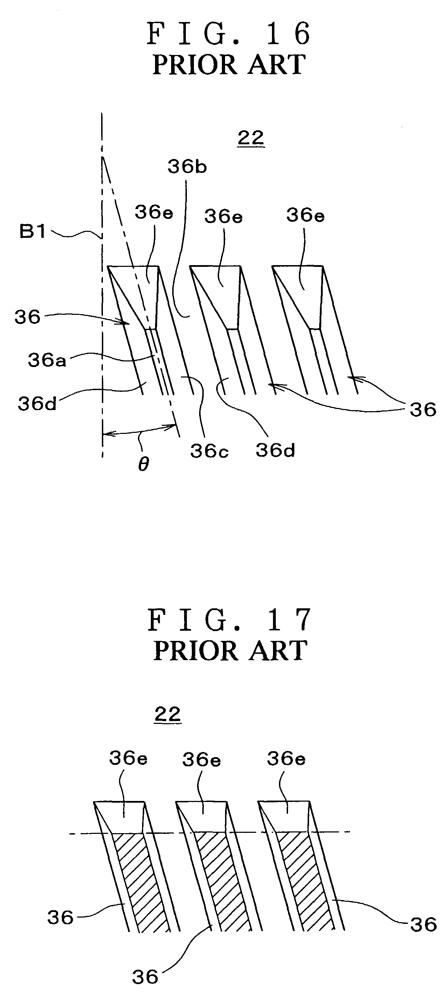

Conventionally, in the case of manufacturing such a helical gear 1 by extrusion, there is used a forming die 22 having such a cylindrical shape as shown in Figs. 14 and 15, inwardly provided with several tooth profile forming portions 36 for teeth 10 to be formed, which obliquely incline with respect to the longitudinal axis B1. Such a forming die 22 is formed by die material such as cemented carbide, and has a cylindrical guide hole 25 formed on the tooth profile forming portions 36 to have the same diameter as the outer diameter of the shaft portion 6. Fig. 16 is a developed view showing the shape of the inner surface of the forming die 22 as viewed from the horizontal direction (along the cross section perpendicular to the longitudinal axis) has been developed. Each tooth profile forming portion 36 is shaped such that it is obliquely twisted by a predeternined helix angle (θ) correspondingly to the tooth trace with respect to the longitudinal axis B1 of the forming die 22, and a plurality of the portions are provided at equal intervals. An upper end portion 36e of each tooth profile forming portion 36 descends toward the longitudinal axis B1 (centre of Fig. 15) of the forming die 22, but is at the same height as shown in Fig. 17 around the longitudinal axis, in other words, circumferentially (in the lateral directions in Fig. 16).

In such a forming die 22, an addendum (bottom land forming portion) 36a of each tooth profile forming portion 36 forms a root 10b between each teeth 10 of the helical gear 1, a root (tooth crest forming portion) 36b between each tooth profile forming portion 36 forms an addendum 10a of the helical gear 1, and a pair of tooth surfaces (tooth surface forming portions) 36c and 36d, facing to each other, of adjacent tooth profile forming portions 36 form tooth surfaces 10c and 10d on both sides of a tooth 10 of the helical gear 1.

The forming die 22 is mounted to a necessary die set to be used for extrusion forming for a helical tooth profile. In other words, for example, cylindrical gear material (billet) cut to a predetermined length, and subjected to annealing, lubricating and the like is inserted into the guide hole 25 within the forming die 22, and a predetermined amount thereof is pressed into the forming die 22 by means of a punch installed thereon. Thus, a plurality of teeth 10 are simultaneously formed on the outer peripheral surface of the material to obtain a helical gear with shaft 1.

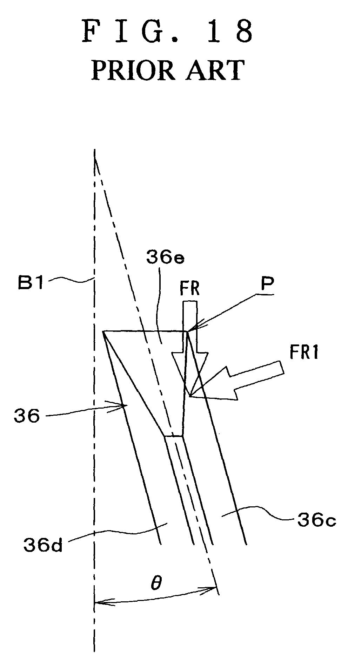

In the forming process, the material is, as shown in Fig. 18, strongly pressed against an introduction-side (contact-side) end portion 36e of the tooth profile forming portion 36 and an introduction-side tooth surface forming portion 36c which inclines correspondingly to a helix angle θ of the tooth profile forming portion 36 with a force having a magnitude of FR. Thus, the material flows in the direction of the longitudinal axis B1 inside the forming die 22 while torsion is being generated while being plastically deformed so as to form the tooth profile. At this time, the material flows while being also pressed against a tooth surface forming portion 36d on the escape side, but is not pressed so strongly as the introduction-side tooth surface forming portion 36c for flowing, and flows, so to speak, as if it escaped to some extent.

This causes a component force of FR1 in a direction (left side shown) perpendicular to a direction of the tooth trace of the twisted tooth profile forming portion 36 as shown in Fig. 18. In other words, the tooth profile forming portion 36 is always subjected to a force in the substantially lateral direction in the forging process, and is susceptible to damage such as cracks in a root thereof and breakage by peeling soon with neighbourhood of the end portion 36e as a reference point P as shown in Fig. 18, and therefore, the conventional forming die 22 has a short service life as the forming die.

When forming a conventional helical tooth profile by forging in accordance with extrusion as described above, there is the problem that the service life of the forming die is short, thus increasing the manufacturing cost for the helical gear and helical tooth profile. Such a problem is serious because the larger the helix angle of the tooth trace is, and the larger the tooth depth is, the sooner the tooth profile forming portion of the forming die will be broken (damaged). Accordingly, there is the problem that it may be difficult to put forming (forging) by extrusion into practical use, depending upon the helical gear or helical tooth profile.

The present invention has been achieved in order to solve the above-described problems, and is aimed to provide, in the case where the helical gear or helical tooth profile is formed by the extrusion, a shape of a helical gear with shaft, and an extrusion forming method for the helical tooth profile, capable of extending the service life of the forming die, and further an extrusion forming die for a helical tooth profile used for the method.

In order to accomplish the above-described objects, there is provided, according to the invention of Claim 1, a helical gear with shaft comprising: a gear portion having a plurality of teeth obliquely twisted with respect to a longitudinal axis; and a shaft portion integrally provided at an end of the gear portion, and formed to have an outer diameter at least larger than a diameter of a root, characterized in that, of connecting portions between the gear portion and the shaft portion, at least one portion of wall surfaces between adjacent tooth surfaces is provided with an inclined surface which inclines in a direction opposite to a direction of torsion of the tooth trace with respect to the longitudinal axis around the longitudinal axis.

In the case of such a helical gear shape, the following forming die can be used on forming (manufacturing) it by using the extrusion forming method, and therefore, it is possible to extend the service life of the forming die. The above-described inclined surface may be one portion of the wall surface and not the whole of it, but in order to prevent the forming die from being damaged, the inclined surface preferably covers the entire surface as recited in the invention according to Claim 2. More specifically, the wall surface (entire) is formed into an inclined surface which inclines in a direction opposite to the direction of torsion of the tooth trace with respect to the longitudinal axis around the longitudinal axis. In this respect, the inclination of the inclined surface may be either linear or curvilinear.

In view of forming as in the case of the present invention according to Claim 3, however, a corner angle between the wall surface and a tooth surface facing the tip side of the gear portion, of tooth surfaces of the teeth, is preferably, as recited in the Claim 2, provided with a fillet (chamfer or radius). The fillet may be either inclined surface-shaped or concave, circular arc-shaped. When such a fillet is provided, the material is prevented from being cracked and flowability of the material is improved on extrusion forming as will be described in detail later.

According to the present invention specified in Claim 4, there is provided a method for extrusion forming a helical tooth profile by pressing gear material into a forming die, in an axial direction thereof, comprising a plurality of tooth profile forming portions obliquely twisted with respect to the longitudinal axis formed on an inner peripheral surface, characterized in that, of the tooth profile forming portions protruding into the forming die on the longitudinal axis side, at least a portion of an introduction-side end portion (end surface) of the gear material, is provided with an inclined surface which inclines in a direction opposite to a direction of torsion of the tooth profile forming portion with respect to the longitudinal axis around the longitudinal axis, the gear material to be pressed in the axial direction is caused to press against this inclined surface, and a force, to which the introduction-side portion near the end portion is subjected, is caused to become lower by means of the torsion of the tooth profile forming portion.

More specifically, in such an extrusion forming method, a portion of the gear material strikes against the introduction-side tooth surface forming portion of the tooth profile forming portion, and is going to break it by a component force in the lateral direction. However, there is generated a reaction force in the opposite direction which opposes to a force toward breaking to receive from the introduction-side tooth surface forming portion because the other portion of the gear material is pressed against the inclined surface of the end portion. Since these two forces are composed to negate each other, the force toward breaking can be reduced by the amount. According to the forming method of the present invention in this manner, a damage preventing operation is exerted in the introduction-side portion near the end portion of the tooth profile forming portion, and therefore, the service life of the forming die for use can be extended. In this respect, helical gears which can be manufactured by using this method are not limited to those, each having a shaft portion at one end portion thereof, and this method exhibits the same effect in the manufacture of helical gears without shaft portions which can be obtained by pressing the forming die out.

Although the above-described inclined surface may be one portion of the end portion and not the whole of it even in the present means, in order to prevent the forming die from being damaged, the inclined surface preferably covers the entire surface as in the case of the invention according to Claim 5. More specifically, as in the case of the invention according to Claim 5, of the tooth profile forming portions protruding into the forming die on the longitudinal axis side, the introduction-side end portion for the gear material is formed into an inclined surface which inclines in a direction opposite to the direction of torsion of the tooth profile forming portion with respect to the longitudinal axis around the longitudinal axis. If performed in this manner in advance, a force resistant to the force toward breaking can be increased. Therefore, when the helix angle of the tooth trace is large, or when the tooth depth is large, it is preferable to do so.

More specifically, of the end portions of the tooth profile forming portions protruding on the longitudinal axis side, at least a portion near the side edge on the opposite side to a direction in which the tooth profile forming portion twists in the circumferential direction may be an inclined surface which gradually becomes lower toward the same direction. However, it is more preferable in view of preventing the tooth profile forming portion from being damaged to cause all the end portions to have such an inclined surface that gradually becomes lower toward a direction opposite to a direction in which the tooth profile forming portion twists around the longitudinal axis (in the circumferential direction).

According to the invention specified in Claim 6 of the present invention, there is provided a method for extrusion forming a helical tooth profile by pressing gear material into a forming die, in the axial direction thereof, comprising a plurality of tooth profile forming portions obliquely twisted with respect to the longitudinal axis formed on the inner peripheral surface, characterized in that, of the tooth profile forming portions protruding into the forming die on the longitudinal axis side, the introduction-side end portion of the gear material, is formed into an inclined surface which inclines in a direction opposite to a direction of torsion of the tooth profile forming portion with respect to the longitudinal axis around the longitudinal axis, a ridge line portion between this inclined surface and the introduction-side tooth surface forming portion of the tooth profile forming portion is provided with a chamfer, the gear material to be pressed in the axial direction is caused to press against this inclined surface, and a force, to which the introduction-side portion near the end portion is subjected, is caused to become lower by means of the torsion of the tooth profile forming portion.

Without such a chamfer, the ridge line portion between the inclined surface at the end portion and the introduction-side tooth surface forming portion would become sharp, and there is a risk of cracking being caused while the material is flowing. In contrast, when the chamfer is thus provided, the cracking can be prevented, and the flowability of the material is improved.

A forming die of Claim 7 to be used for such a method is an extrusion forming die for a helical tooth profile to be used for extrusion forming a helical tooth profile by pressing gear material into a forming die, in the axial direction thereof, comprising a plurality of tooth profile forming portions obliquely twisted with respect to the longitudinal axis formed on the inner peripheral surface, characterized in that, of the tooth profile forming portions protruding on the longitudinal axis side, at least a portion of the introduction-side end portion of the gear material, is provided with an inclined surface which inclines in a direction opposite to a direction of torsion of the tooth profile forming portion with respect to the longitudinal axis around the longitudinal axis.

As in the case of the extrusion forming die for a helical tooth profile specified in Claim 8, however, of the tooth profile forming portions protruding on the longitudinal axis side, the introduction-side end portion of the gear material is preferably formed into an inclined surface which inclines in a direction opposite to a direction of torsion of the tooth profile forming portion with respect to the longitudinal axis around the longitudinal axis in order to prevent the forming die from being damaged.

According to the invention specified in Claim 9 of the present invention, there is provided an extrusion forming die for a helical tooth profile to be used for extrusion forming a helical tooth profile by pressing gear material into a forming die, in the axial direction thereof, comprising a plurality of tooth profile forming portions obliquely twisted with respect to the longitudinal axis formed on an inner peripheral surface, characterized in that, of the tooth profile forming portions protruding on the longitudinal axis side, the introduction-side end portion of the gear material, is formed into an inclined surface which inclines in a direction opposite to a direction of torsion of the tooth profile forming portion with respect to the longitudinal axis around the longitudinal axis, and that a ridge line portion between this inclined surface and the introduction-side tooth surface forming portion of the tooth profile forming portion is provided with a chamfer.

Detailed description of the present invention will be now given with reference to the accompanying drawings.

In the drawings:
Fig. 1 is a front view showing a helical gear with shaft according to an embodiment of the present invention;
Fig. 2 is a partial enlarged view of Fig. 1;
Fig. 3 is a central longitudinal sectional view showing an extrusion forming die for a helical tooth profile for manufacturing the helical gear of Fig. 1;
Fig. 4 is a developed view showing the neighbourhood of an introduction-side end portion of a tooth profile forming portion on an inner peripheral surface of the forming die of Fig. 3 as viewed from the horizontal direction (along a cross section perpendicular to the longitudinal axis);
Fig. 5 is a sectional view obtained by cutting the introduction-side portion near the end portion of one tooth profile forming portion by an imaginary cylinder having the same longitudinal axis;
Fig. 6 is an enlarged view showing the neighbourhood of the introduction-side end portion of the tooth profile forming portion of Fig. 4;
Fig. 7 is an enlarged view showing another embodiment of the introduction-side end portion of the tooth profile forming portion;
Fig. 8 is an enlarged view showing another embodiment of the introduction-side end portion of the tooth profile forming portion;
Fig. 9 is an enlarged view showing another embodiment of the introduction-side end portion of the tooth profile forming portion;
Fig. 10 is an enlarged view showing another embodiment of the introduction-side end portion of the tooth profile forming portion;
Fig. 11 is a front partial enlarged view showing a helical gear with shaft according to another embodiment of the present invention;
Fig. 12 is a front view showing a conventional helical gear with shaft;
Fig. 13 is a sectional view taken on line A-A in Fig. 12;
Fig. 14 is a central longitudinal sectional view showing an extrusion forming die for a helical tooth profile for manufacturing the helical gear of Fig. 12;
Fig. 15 is a transverse sectional view in Fig. 14;
Fig. 16 is a developed view showing the neighbourhood of an introduction-side end portion of a tooth profile forming portion on an inner peripheral surface of the forming die of Fig. 14 as viewed from the horizontal direction;
Fig. 17 is a sectional view obtained by cutting the introduction-side portion near the end portion of the tooth profile forming portion of Fig. 16 by an imaginary cylinder having the same longitudinal axis; and
Fig. 18 is an explanatory view when the gear material is pressed against the tooth profile forming portions on the inner peripheral surface of the forming die of Fig. 15.

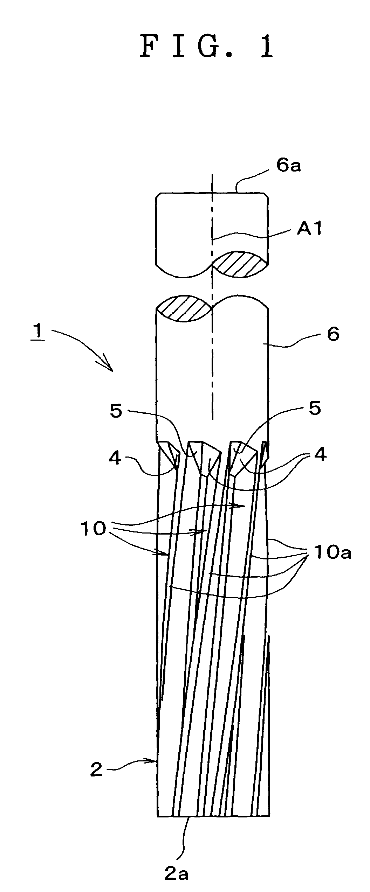

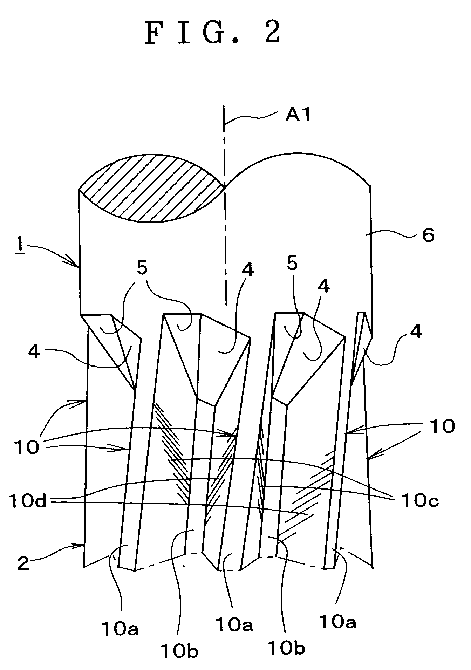

With reference to Figs. 1 to 6, a detailed description will be made of embodiments according to the present invention. First, with reference to Figs. 1 and 2, a description will be made of a helical gear with shaft 1 of the present embodiment. As shown in Figs. 1 and 2, a tooth trace of each of tooth 10 thereof inclines from upper right toward lower left in Fig. 1 with respect to a longitudinal axis A1, and a plurality of teeth 10 are formed at equal intervals to constitute a gear portion 2. At the upper end portion of this gear portion 2, there is provided a cylindrical shaft portion 6 having the substantially same diameter as the addendum circle diameter. In this respect, the width of the addendum 10a of each of tooth 10 is the same throughout the entire length of the tooth trace in the same manner as normal gears. The foregoing is the same as a conventional helical gear with shaft.

On the other hand, as shown in Figs. 1 and 2, of connecting portions between the gear portion 2 and the shaft portion 6, each wall surface 4 between adjacent tooth surfaces 10d and 10c is substantially trapezoid-shaped. In order to enhance the flow performance of the gear material during forming, each wall surface 4 inclines so as to face a tip 2a of the gear portion 2 as the whole (entire trapezoid surface) comes closer to the longitudinal axis (centre) A1. And yet, each wall surface 4 is all formed into an inclined surface which inclines at a predetermined angle in a direction opposite to the direction of torsion of the tooth trace with respect to the longitudinal axis A1 around the longitudinal axis A1, that is, in the circumferential direction. In each wall surface 4, however, a corner angle between the wall surface 4 and a tooth surface 10c facing a side of the tip 2a of the gear portion 2, of tooth surfaces 10d and 10c of the tooth, that is, of corner angles between the wall surface 4 and tooth surfaces 10d and 10c of the tooth, a corner angle (corner angle located at the left end of each wall surface 4 in Fig. 2) located near a proximal end (upper end in Fig. 1) 6a of the shaft portion 2 is provided with a fillet 5 in the form of a chamfer in the present embodiment.

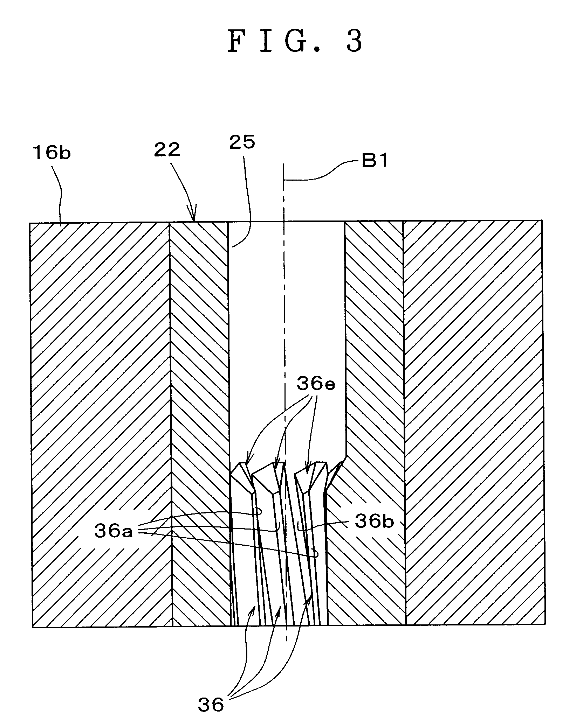

Such a helical tooth profile of the helical gear 1 is formed by using such an extrusion forming die 22 as shown in Fig. 3. Fig. 3 is a central, longitudinal sectional view showing a die set in which a reinforcing ring 16b made of steel is fitted over the forming die 22 on the outer side thereof. In the present embodiment, the forming die 22 is made of die material such as cemented carbide, its central portion is formed as a vertical through-hole, each tooth profile forming portion 36 inside obliquely inclines by a predetermined helix angle (θ) with respect to the longitudinal axis B1 in the same manner as the torsion of tooth trace of the helical gear, and several teeth 10 to be formed are formed at a predetermined height side by side at equal intervals. Above the tooth profile forming portion 36 group, there is provided a cylindrical guide hole 25 for the gear material formed in the same diameter as the addendum circle diameter of the gear portion 2.

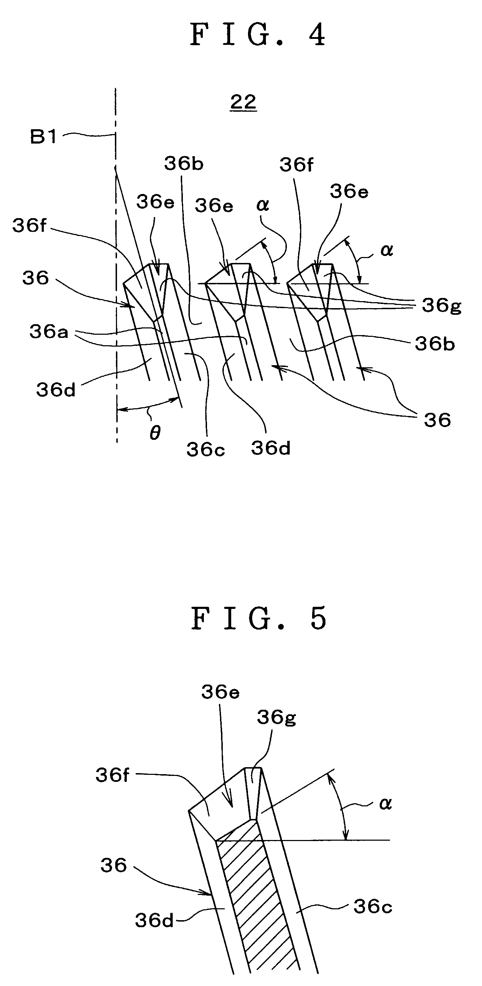

In the forming die 22, the addendum (root forming portion) 36a of each tooth profile forming portion 36 forms a root 10b between each teeth 10 of the helical gear 1, and the root (addendum forming portion) 36b between each tooth profile forming portion 36 forms the addendum 10a of the helical gear 1 (see Fig. 4). Of a pair of tooth surfaces, facing each other, of the tooth profile forming portions 36 adjacent to each other, the introduction-side (up-facing tooth surface as shown) one is an introduction-side tooth profile forming portion 36c, and the escape-side (down-facing tooth surface as shown) one is an escape-side tooth surface forming portion 36d such that the respective ones form tooth surfaces 10c and 10d of the tooth 10 of the helical gear 1. In this respect, such a tooth profile forming portion is machined or formed by means of electric discharge machine, polishing and the like.

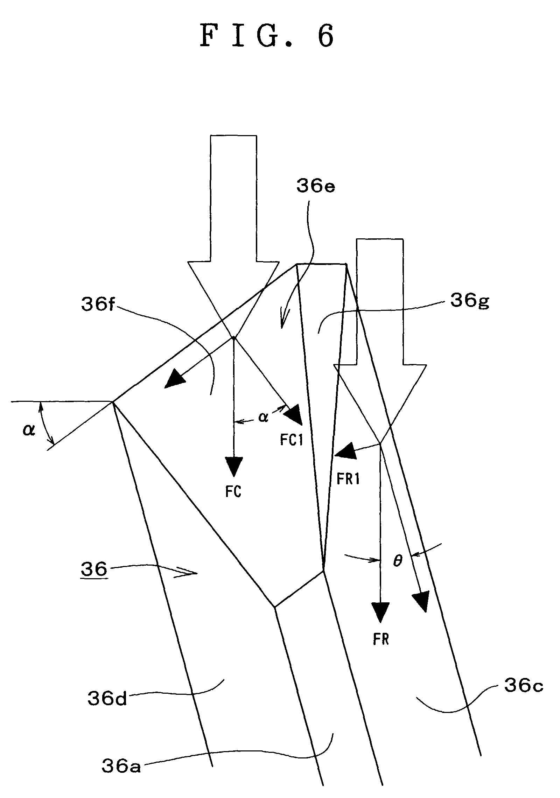

Fig. 4 is a developed view showing a shape of the neighbourhood of an introduction-side end portion (end surface) 36e of a tooth profile forming portion 36 on an inner peripheral surface of the forming die 22, which is the gist of the present invention, as viewed from the horizontal direction (along a cross section perpendicular to the longitudinal axis), and Fig. 5 is a sectional view obtained by cutting the introduction-side end portion 36e of one tooth profile forming portion by an imaginary cylinder having the same longitudinal axis. Fig. 6 is an enlarged view showing the introduction-side end portion 36e of one tooth profile forming portion 36. As shown in the same figure, the upper side (introduction-side) end portion 36e of each tooth profile forming portion 36, which protrudes on the longitudinal axis B1 side within the forming die 22, descends along the wall surface 4 of the connecting portion of the helical gear 1 toward the longitudinal axis (centre) B1 of the forming die 22. The substantially whole (substantially entire surface) of the same end portion 36e is all formed into an inclined surface 36f which inclines at a predetermined angle (α) with respect to a surface perpendicular to the longitudinal axis B1 in a direction opposite to the direction of torsion (right direction in Figs. 4 and 5) of the tooth profile forming portion 36 with respect to the longitudinal axis B1 around the longitudinal axis B1.

In other words, substantially all the material introduction-side end portions (upper side end portions of Fig. 4) 36e of each tooth profile forming portion 36 incline by a predetermined angle α so as to become gradually lower toward the left in the same figure and not horizontally in the circumferential direction (see Fig. 5). When a load is applied to this end portion 36e in the axial direction B1, the structure is arranged such that the inclination causes a component force to act in the right direction in Fig. 5. In the present embodiment, the end portion 36e of the tooth profile forming portion 36 is provided with a chamfer 36g along a ridge line portion between the end portion 36e of the tooth profile forming portion 36 and the introduction-side tooth surface forming portion 36c with a predetermined width in the circumferential direction, that is, correspondingly to the fillet 5 of the wall surface 4 at the connecting portion of the helical gear 1. In the present embodiment, however, the chamfer 36g has a flat surface (plane), and is horizontal (α =0) in the circumferential direction.

Next, a description will be made of a manufacturing process using the extrusion forming die 22 for the helical gear 1 according to the above-described structure. Gear material (billet) consisting of steel or the like, formed into a cylindrical shape having a smaller diameter than the guide hole 25 in the forming die 22, is inserted and disposed in the hole 25 under the same temperature conditions (for example, at normal temperature or 150 to 200 °C) as the conditional case. Then, a punch (upper die) (not shown) disposed on the hole 25 is caused to lower for pressurizing the gear material, and it is pressed into the forming die 22. Then, a portion, near the outer periphery, at the lower end portion of the cylindrical gear material is pressed against the end portions 36e of the tooth profile forming portions 36 provided on the inner peripheral surface of the forming die 22 and the introduction-side tooth surface forming portions 36c to be plastically deformed, and flows into grooves between the tooth profile forming portions 36 adjacent to each other at the end portions 36e to form a desired helical tooth profile.

At this time, in order to prevent the material from being punched within the forming die 22, a stroke of the press is set such that it lowers by a predetermined amount to stop the lowering of the upper die. Then, if knockouts (not shown) provided below are moved upward to press back the formed gear material (formed part) upward and it is extracted from the forming die 22, a helical gear with shaft 1 having the appearance and shape shown in Fig. 1 can be obtained. In the helical gear 1 thus obtained, of the connecting portions between the gear portion 2 and the shaft portion 6, substantially all wall surfaces 4 between the tooth surfaces 10c and 10d incline in a direction opposite to the direction of torsion of the tooth trace in the circumferential direction. However, a corner angle between the wall surface 4 and the tooth surface 10c facing the tip 2a side of the gear portion 2 is provided with a fillet 5.

In this respect, if the material is punched (pressed through) within the forming die 22 unlike such forming of the helical gear with shaft 1, a helical gear having teeth on the entire peripheral surface, that is, entirely in the tooth-width direction (axial direction of the gear) will be manufactured.

In the forming die 22 of the present embodiment, the end portion 36e of the tooth profile forming portion 36 inclines in a direction opposite to the direction of torsion of the tooth profile forming portion 36 with respect to the longitudinal axis around the longitudinal axis. Therefore, when cylindrical gear material is pressed into the forming die 22 in the forming process, the material is pressed against the end portion 36e of the introduction-side tooth profile forming portion 36 as shown in Fig. 6 to be plastically deformed, and flows along the tooth trace in the groove between the adjacent tooth profile forming portions 36 to be formed into the tooth shape. At this time, part of the material strikes against the introduction-side tooth surface forming portion 36c with a force FR, and at the time, the inclination of the tooth trace causes a left-ward force FR1 in the figure.

On the other hand, part of the rest of the material is pressed against the end portion 36e with the force FC, and at the time, a circumferential inclination α causes a rightward force FC1 in the figure. In other words, when the end portion has no circumferential inclination, that is, when α=0, only FR1 is generated, and this force, as it is, breaks a portion near the end portion of the tooth profile forming portion 36, whereas in the present embodiment, since a force FC1 resistive to the FR1 is generated, the breaking force for the tooth profile forming portion 36 can be reduced that much. Thus, according to the present embodiment, the damage to the tooth profile forming portion is effectively prevented, and therefore, the service life of the forming die can be extended to reduce the manufacturing cost in the extrusion forming method for a helical gear or a helical tooth profile.

And yet, according to the present embodiment, the end portion 36e of the tooth profile forming portion 36, that is, a ridge line portion between the inclined surface 36f and the introduction-side tooth surface forming portion 36c of the tooth profile forming portion is provided with a chamfer 36g based on the flat surface (α=0), and therefore, the ridge line between the end portion 36e and the introduction-side tooth surface forming portion 36c is not sharp. More specifically, if the entire end portion 36e is formed into an inclined surface 36f in advance, the area, in which the component force FC1 effective to prevent the damage is generated, becomes larger, but the ridge line becomes sharp. Therefore, there is a risk of cracking being caused while the material is flowing. In contrast, in the present embodiment, since the chamfer 36g is provided as described above, the cracking can be prevented, and the flowability of the material is improved.

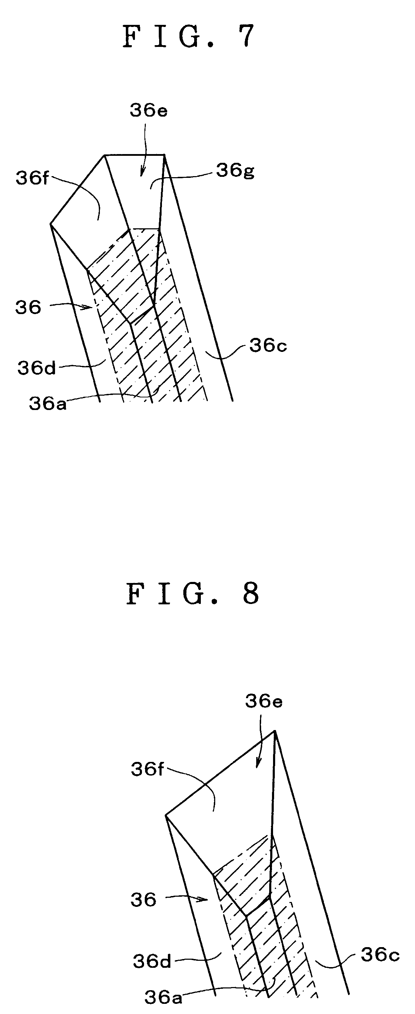

In the above-described embodiment, the end portion 36e for each tooth profile forming portion 36 is provided such that the substantially entire end portion 36e inclines to the left in the circumferential direction except for the chamfer 36g. However, the end portion 36e for each tooth profile forming portion 36 according to the present invention will suffice so long as a component force effective to prevent the tooth profile forming portion 36 for protruding on the longitudinal axis side from being damaged can be generated, and therefore, the substantially entire surface for the end portion 36e need not incline as described above. In other words, part of the end portion 36e is formed into an inclined surface 36f which inclines in a direction opposite to the direction of torsion of the tooth profile forming portion 36 with respect to the longitudinal axis around the longitudinal axis, and the gear material to be pressed in the axial direction is caused to press against the inclined surface 36f and a force, to which the introduction-side portion near the end portion is subjected, can be made lower by means of the torsion of the tooth profile forming portion. Therefore, it might be possible to make smaller the inclined surface 36f at the end portion 36e as shown in Fig. 7.

Conversely, in the case of a gear having such material that any occurrence of cracks does not pose any problems, there may be used an inclined surface 36f, in which the entire end portion 36e for each tooth profile forming portion 36 inclines in the circumferential direction as shown in Fig. 8. In a helical gear with shaft obtained by forming using an extrusion forming die for a helical tooth profile having tooth profile forming portions having no chamfers as described above, each wall surface 4 between tooth surfaces adjacent to each other, of connecting portions between the gear portion and the shaft portion is provided with no fillets at the corner angle between the wall surface 4 and the tooth surface.

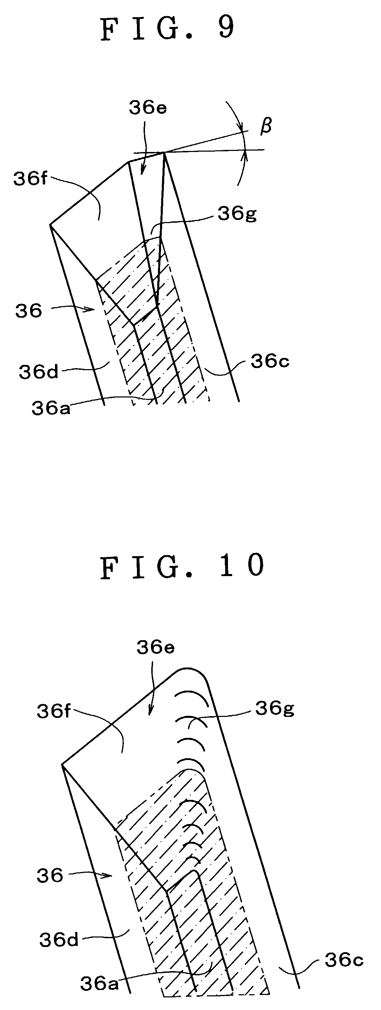

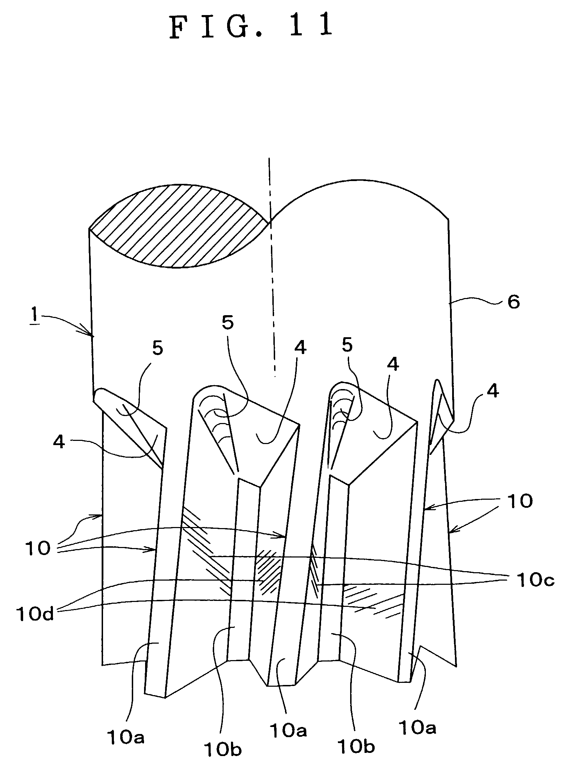

In this respect, according to the above-described embodiment, in the case of providing a ridge line portion, with a chamfer, between the inclined surface 36f at the end portion 36e of each tooth profile forming portion 36 and the introduction-side tooth surface forming portion 36c, the chamfer 36g has been formed into a flat surface being horizontal (α=0) in the circumferential direction (around the longitudinal axis). However, the flat surface may be angled at some angle (β) in the circumferential direction as in the case of the chamfer 36g at the end portion 36e of the tooth profile forming portion 36 shown in Fig. 9. Further, as shown in Fig. 10, this chamfer 36g may be formed into corner rounding in which a ridge line between the inclined surface 36f and the introduction-side tooth profile forming portion 36c is rounded (convex circular arc-shaped). Since the ridge line between the inclined surface 36f of the end portion 36e and the introduction-side tooth profile forming portion 36c does not become sharp even though performed as described above, the end portion 36e is prevented from being cracked during flowing of the material, and the flowability of the material is improved. In a helical gear with shaft obtained by forming by using an extrusion forming die for a helical tooth profile having tooth profile forming portions 36 provided with such corner rounding 36g as described above, each wall surface 4 between tooth surfaces 10c and 10d, adjacent to each other, of connecting portions between the gear portion 2 and the shaft portion 6 will be provided with a circular arc-shaped fillet 5 at the corner angle between the wall surface 4 and the tooth surface 10c facing the tip 2a side of the gear portion as shown in Fig. 11.

As regards an angle of inclination α of the inclined surface at the end portion of each tooth profile forming portion in the circumferential direction according to the present invention, it needs not be the same between at a portion (tip side for protruding) near the longitudinal axis (centre) and at a portion (proximal end side) near the outer periphery. The inclination in the circumferential direction needs not be linear, and for example, a curve having a convex end portion may be used. In other words, the end portion can be used so long as there can be generated a component force in the opposite direction resistible to the component force to receive from the introduction-side tooth surface forming portion caused by the torsion of the tooth trace. In this respect, the angle α of inclination, curvature and inclination of the curve when the inclination is made linear can be appropriately set in response to the magnitudes and the like of the helix angle of the tooth and tooth depth, and the helical tooth profile so as to obtain a component force effective to prevent the tooth profile forming portion from being broken.

By the way, when it is made linear, if a helix angle θ (with respect to a straight line parallel to the longitudinal axis (B1)) of the tooth profile is 5° orless, an angle α of an inclined surface which inclines in a direction opposite to the direction of torsion of the tooth profile forming portion with respect to the longitudinal axis around the longitudinal axis can be set to 15° or less with respect to a horizontal surface (perpendicular surface to the longitudinal axis); if the helix angle θ of the tooth profile is 5° to 15°, the angle α of the inclined surface can be set to 5° to 45° with respect to the horizontal surface; and further if the helix angle θ of the tooth profile is 15° to 45°, the angle α of the inclined surface can be set to 20° to 50° with respect to the horizontal surface. There is a variety of the optimum value in this manner because the conditions during forming vary depending upon the module, pressure angle, number of teeth, tooth depth and the like in addition to the helix angle of the gear.

In this respect, in the foregoing, the diameter of the guide hole 25 in the forming die 22 has been set to the same diameter as the addendum circle diameter of the gear portion 2, but may be larger than it, and if the addendum circle diameter is larger than the diameter of the root, the diameter of the guide hole 25 may be smaller than the addendum circle diameter. In this manner, the helical gear with shaft and helical tooth profile according to the present invention are not limited to the above-described embodiments. In addition, the present invention is not limited to the contents described above, but can be embodied by appropriately modifying the gist so far as it is not deviated.

As seen from the above description, according to the helical gear with shaft of the present invention, in the case of forming (manufacturing) it by using the extrusion forming method, the service life of the forming die can be extended. Therefore, reduction in the production cost can be expected. More specifically, according to the extrusion forming method for a helical tooth profile and an extrusion forming die for a helical tooth profile to be used for the method of the present invention, they are effective to prevent the tooth profile forming portion protruding on the longitudinal axis side of the forming die from being damaged, and therefore, the service life of the forming die can be extended. Therefore, the forming cost for various helical tooth profiles including helical gears without shafts as well as helical gear with shafts can be reduced.

## Claims

1. A helical gear with shaft, comprising:
a gear portion having a plurality of teeth obliquely twisted with respect to a longitudinal axis; and
a shaft portion integrally provided at an end portion of said gear portion, and formed to have an outer diameter at least larger than a diameter of a root, characterized in that
of connecting portions between said gear portion and said shaft portion, at least one portion of wall surfaces between adjacent tooth surfaces is provided with an inclined surface which inclines in a direction opposite to a direction of torsion of a tooth trace with respect to said longitudinal axis around said longitudinal axis.

2. A helical gear with shaft, comprising:
a gear portion having a plurality of teeth obliquely twisted with respect to a longitudinal axis; and
a shaft portion integrally provided at an end portion of said gear portion, and formed to have an outer diameter at least larger than a diameter of a root, characterized in that
of connecting portions between said gear portion and said shaft portion, each wall surface between adjacent tooth surfaces is formed into an inclined surface which inclines in a direction opposite to the direction of torsion of the tooth trace with respect to a longitudinal axis around a longitudinal axis.

3. The helical gear with shaft according to Claim 2, wherein a corner angle between said wall surface and a tooth surface facing the tip side of said gear portion, of tooth surfaces of said teeth, is provided with a fillet.

4. A method for extrusion forming a helical tooth profile by pressing gear material into a forming die, in an axial direction thereof, comprising a plurality of tooth profile forming portions obliquely twisted with respect to a longitudinal axis formed on an inner peripheral surface, characterized in that
of said tooth profile forming portions protruding into said forming die on said longitudinal axis side, at least a portion of an introduction-side end portion of said gear material, is provided with an inclined surface which inclines in a direction opposite to a direction of torsion of said tooth profile forming portion with respect to said longitudinal axis around said longitudinal axis, said gear material to be pressed in the axial direction is caused to press against said inclined surface, and a force, to which the introduction-side portion near the end portion is subjected, is caused to become lower by means of the torsion of said tooth profile forming portion.

5. A method for extrusion forming a helical tooth profile by pressing gear material into a forming die, in an axial direction thereof, comprising a plurality of tooth profile forming portions obliquely twisted with respect to a longitudinal axis formed on an inner peripheral surface, characterized in that
of said tooth profile forming portions protruding into said forming die on the longitudinal axis side, an introduction-side end portion of said gear material, is formed into an inclined surface which inclines in a direction opposite to a direction of torsion of said tooth profile forming portion with respect to said longitudinal axis around said longitudinal axis, said gear material to be pressed in the axial direction is caused to press against said inclined surface, and a force, to which the introduction-side portion near the end portion is subjected, is caused to become lower by means of the torsion of said tooth profile forming portion.

6. A method for extrusion forming a helical tooth profile by pressing gear material into a forming die, in the axial direction thereof, comprising a plurality of tooth profile forming portions obliquely twisted with respect to a longitudinal axis formed on the inner peripheral surface, characterized in that
of said tooth profile forming portions protruding into said forming die on the longitudinal axis side, the introduction-side end portion of said gear material, is formed into an inclined surface which inclines in a direction opposite to a direction of torsion of said tooth profile forming portion with respect to the longitudinal axis around the longitudinal axis, a ridge line portion between said inclined surface and the introduction-side tooth surface forming portion of said tooth profile forming portion is provided with a chamfer, said gear material to be pressed in the axial direction is caused to press against said inclined surface, and a force, to which the introduction-side portion near the end portion is subjected, is caused to become lower by means of the torsion of said tooth profile forming portion.

7. An extrusion forming die for a helical tooth profile to be used for extrusion forming a helical tooth profile by pressing gear material into a forming die, in an axial direction thereof, comprising a plurality of tooth profile forming portions obliquely twisted with respect to a longitudinal axis formed on an inner peripheral surface, characterized in that
of said tooth profile forming portions protruding on the longitudinal axis side, at least a portion of the introduction-side end portion of said gear material, is provided with an inclined surface which inclines in a direction opposite to a direction of torsion of said tooth profile forming portion with respect to the longitudinal axis around the longitudinal axis.

8. An extrusion forming die for a helical tooth profile to be used for extrusion forming a helical tooth profile by pressing gear material into a forming die, in the axial direction thereof, comprising a plurality of tooth profile forming portions obliquely twisted with respect to a longitudinal axis formed on an inner peripheral surface, characterized in that
of said tooth profile forming portions protruding on the longitudinal axis side, the introduction-side end portion of said gear material is formed into an inclined surface which inclines in a direction opposite to a direction of torsion of said tooth profile forming portion with respect to the longitudinal axis around the longitudinal axis.

9. An extrusion forming die for a helical tooth profile to be used for extrusion forming a helical tooth profile by pressing gear material into a forming die, in the axial direction thereof, comprising a plurality of tooth profile forming portions obliquely twisted with respect to a longitudinal axis formed on an inner peripheral surface, characterized in that
of said tooth profile forming portions protruding on the longitudinal axis side, the introduction-side end portion of said gear material, is formed into an inclined surface which inclines in a direction opposite to a direction of torsion of said tooth profile forming portion with respect to the longitudinal axis around the longitudinal axis, and that a ridge line portion between said inclined surface and the introduction-side tooth surface forming portion of said tooth profile forming portion is provided with a chamfer.
